# FASCICULE DE BREVET EUROPEEN

(11) **EP 1 759 441 B1**
(45) Date de publication et mention de la délivrance du brevet: **29.07.2009**
(21) Numéro de dépôt: 05769931.6
(22) Date de dépôt: 17.06.2005
(51) Int. Cl.: H01S 3/23, H04L 7/00

(54) **DISPOSITIF ELECTRONIQUE DE GENERATION DE SIGNAUX DE SYNCHRONISATION SECURISES**
ELEKTRONISCHE VORRICHTUNG ZUR ERZEUGUNG VON SICHEREN SYNCHRONISATIONSSIGNALEN
ELECTRONIC DEVICE FOR GENERATING SECURE SYNCHRONISATION SIGNALS

(30) Priorité: 22.06.2004 FR 0406782
(43) Date de publication de la demande: 07.03.2007
(73) Titulaire: THALES, 92200 Neuilly sur Seine (FR)
(72) Inventeur: LEFEBVRE, Patrick, THALES Intellectual Property, F-94117 ARCUEIL Cedex (FR)
(74) Mandataire: Bréda, Jean-Marc
(86) Numéro de dépôt international: PCT/EP2005/052829
(87) Numéro de publication internationale: WO 2005/124947

(56) Documents cités:
- EP-A- 0 652 642
- US-A- 3 346 741
- US-A1- 2001 010 003
- US-B1- 6 282 210

## Description

Le domaine de l'invention est celui des dispositifs électroniques de génération de signaux de synchronisation. Plus spécifiquement, le domaine technique est celui des signaux de synchronisation à très haute résolution, la précision temporelle des signaux étant inférieure à la nanoseconde. Ces dispositifs sont notamment utilisés dans les chaînes lasers délivrant des trains d'impulsions laser ultra-brèves à haute énergie, la durée des impulsions étant de l'ordre de quelques centaines de femtosecondes et leur énergie de l'ordre du térawatt.

Ces chaînes comportent le plus souvent un grand nombre d'éléments optoélectroniques nécessaires à la génération, à l'amplification et à la mise en forme des impulsions laser ainsi que des éléments de commande, de contrôle et de mesure de ces impulsions. Or, les impulsions émises ayant une durée très brève, il est fondamental de synchroniser les différents éléments de la chaîne avec une grande précision temporelle de façon à garantir à la fois un fonctionnement optimal de la chaîne et la meilleure reproductibilité possible des impulsions émises.

Les dispositifs de synchronisation actuels présentent un certain nombre d'inconvénients. D'une part, l'horloge interne de ces différents dispositifs n'est pas nécessairement parfaitement synchronisée avec un signal externe issu d'un élément du système à synchroniser. D'autre part, lorsque le système comporte un grand nombre d'éléments à synchroniser, il devient impossible de tous les synchroniser avec un seul dispositif de synchronisation. Dans ce cas, on utilise plusieurs dispositifs de synchronisation qui sont synchronisés entre eux par des dispositifs de déclenchement encore appelés en terminologie anglo-saxonne « trigger ». Ces déclenchements sont réalisés à partir des signaux d'horloge interne des dispositifs de synchronisation. Ces signaux d'horloge sont périodiques. On démontre que la précision du déclenchement est égale à une période du signal d'horloge. Par exemple, pour un signal d'horloge émis à une fréquence de 100 mégaHertz, la précision de synchronisation est égale alors à une période, soit 10 nanosecondes. Cette précision n'est pas suffisante, pour certaines applications, pour permettre une synchronisation parfaite des différents éléments du système.

Pour pallier ces inconvénients, le dispositif peut fonctionner non plus avec une horloge interne mais avec une horloge externe issue du dispositif à synchroniser. On évite ainsi toute dérive temporelle et toute imprécision de déclenchement des signaux de synchronisation. Cependant, cette solution présente l'inconvénient, qu'en cas de disparition du signal externe, l'ensemble du dispositif de synchronisation ne peut plus fonctionner. La disparition des signaux de synchronisation peut alors avoir des conséquences graves. En effet, la rupture du signal d'horloge externe est la manifestation d'un dysfonctionnement du système à synchroniser. Pour certaines applications, en particulier dans les chaînes lasers impulsionnelles, il est important de prendre alors des dispositions permettant de protéger les éléments de la chaîne pouvant être endommagés par ce dysfonctionnement. C'est le cas notamment des amplificateurs de puissance qui ne doivent fonctionner qu'en présence du faisceau laser à amplifier.

Le document US 3346741 décrit un dispositif de synchronisation, dans une chaîne laser, selon l'état de la technique.

Le dispositif selon l'invention comporte un dispositif de sécurité permettant de suppléer aux dysfonctionnements de l'horloge externe par la mise en place d'une horloge interne qui prend le relais de l'horloge externe en cas de dysfonctionnement. Le dispositif comporte également des moyens de gestion électronique permettant de continuer de gérer le système à synchroniser et d'éviter ainsi que des éléments soient détériorés.

Plus précisément, l'invention a pour objet une chaîne laser selon la revendication 1.

L'invention sera mieux comprise et d'autres avantages apparaîtront à la lecture de la description qui va suivre donnée à titre non limitatif et grâce aux figures annexées parmi lesquelles :
- la figure 1 représente le synoptique général du dispositif selon l'invention ;
- la figure 2 représente le diagramme du protocole de fonctionnement du dispositif de sécurité selon l'invention;
- la figure 3 représente une chaîne laser incorporant un dispositif selon l'invention.

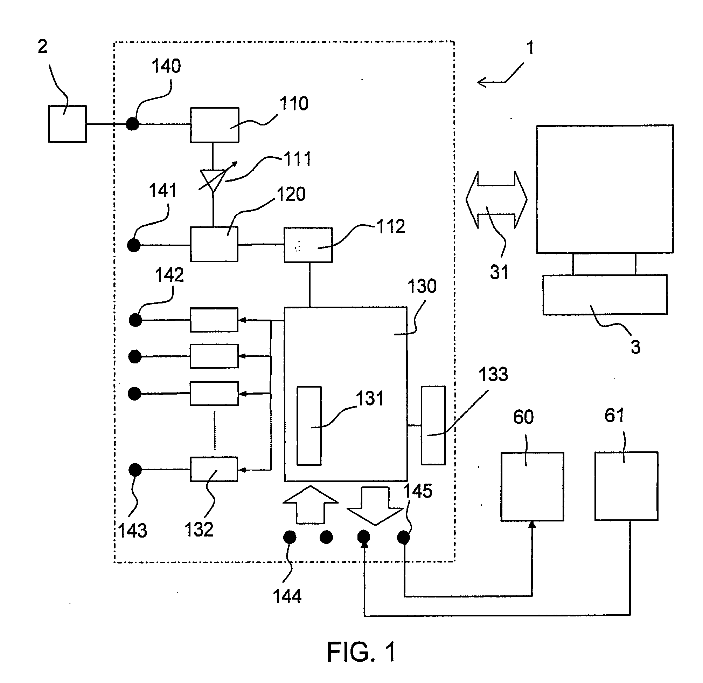

A titre d'exemple non limitatif, la figure 1 représente un dispositif électronique de génération de signaux de synchronisation 1 selon l'invention. Il comprend essentiellement :
- des moyens électroniques de filtrage 110, d'amplification 111 et de mise à niveau 112, permettant la mise en forme d'un signal d'horloge externe de façon à obtenir un signal sinusoïdal positif de fréquence identique à la première fréquence d'oscillation ;
- des moyens électroniques 130, 131 et 132 de génération à partir dudit signal sinusoïdal:
   o d'un premier signal périodique de synchronisation servant de référence de base de temps, ledit signal ayant une première fréquence de répétition, ledit signal fourni sur une sortie électronique 142 dite sortie référence ;
   o d'une pluralité de seconds signaux périodiques de synchronisation, lesdits seconds signaux étant décalés d'une durée programmable par rapport au premier signal de synchronisation, lesdits seconds signaux étant fournis sur des sorties électroniques 143 dites sorties signaux à délais programmés ;
- une horloge interne 133 émettant un signal d'horloge interne oscillant à une seconde fréquence sensiblement identique à la première fréquence ;
- des moyens électroniques de gestion de sécurité 130, de façon que ledit signal interne se substitue au signal d'horloge externe en cas de perte de celui-ci.
- des moyens de génération 120 d'un second signal d'horloge externe de synchronisation ayant une fréquence identique au premier signal d'horloge externe, ledit signal étant fourni sur une sortie électronique 141 dite sortie horloge.
- des moyens d'interface électronique 31 avec un micro-ordinateur 3 de contrôle, ledit micro-ordinateur permettant de commander et de programmer tout ou partie des fonctions du dispositif.
- des moyens électroniques de déclenchement permettant de synchroniser certaines fonctions du dispositif à partir d'au moins un signal externe, ledit signal étant fourni sur une entrée électronique 144 dite entrée « Trigger ».
- des moyens de commande permettant de délivrer des signaux de commande pour des dispositifs électroniques ou pour des dispositifs électromécaniques 60 ou de recevoir des signaux de commande venant de systèmes de sécurité 61, lesdits signaux étant délivrés sur des sortie électroniques de commande 145.

Un certain nombre d'instruments ou de systèmes électroniques ou optoélectroniques, tels les lasers impulsionnels, délivrent un signal d'horloge de très grande stabilité. On utilise ce signal d'horloge pour synchroniser les différentes composantes du dispositif à synchroniser.

La fonction principale des moyens électroniques 130, 131 et 132 est de générer à partir du signal d'horloge les signaux de synchronisation S_{SYNC}. Le coeur de ces moyens électroniques est constitué par un composant numérique programmable 130 qui peut être de type FPGA, acronyme anglo-saxon pour « Fast Programmable Gate Array ». Ce composant numérique génère :
- un premier signal périodique de synchronisation S₀ servant de référence de base de temps, ledit signal ayant une première fréquence de répétition, ledit signal fourni sur une sortie électronique 142 dite sortie référence.
- une pluralité de seconds signaux périodiques de synchronisation S_{SYNC}, lesdits seconds signaux étant décalés d'une durée programmable δ_{M} par rapport au premier signal de synchronisation S₀, lesdits seconds signaux étant fournis sur des sorties électroniques 143 dites sorties signaux à délais programmés, lesdits seconds signaux ayant des secondes fréquences de répétition.

Les signaux de synchronisation S₀ et S_{SYNC} ont la forme de trains d'impulsions temporelles identiques, chaque impulsion ayant la forme d'un créneau, le front de montée M et le front de descente D dudit créneau étant décalés d'une première durée δ_{M} et d'une seconde durée δ_{D} programmables par rapport au front de montée du créneau correspondant du premier signal de synchronisation S₀ pris comme référence. La durée T_{SYNC} séparant deux impulsions est égale à l'inverse de la fréquence de répétition f_{SYNC} du signal de synchronisation S_{SYNC}. Cette fréquence de répétition f_{SYNC} est réglable en fonction de l'utilisation du signal de synchronisation.

Le composant numérique programmable 130 fonctionne à la fréquence d'horloge et ne peut délivrer des signaux avec une résolution temporelle supérieure à la période de ladite fréquence d'horloge. Ainsi, si la fréquence d'horloge est de 100 mégaHertz, la résolution intrinsèque du composant numérique programmable est de 10 nanosecondes. Pour obtenir des résolutions temporelles inférieures, on dispose de lignes à retard 132 programmables en sortie du composant numérique programmable 130, chacun des seconds signaux de synchronisation S_{SYNC} étant issus de ces lignes à retard. On obtient ainsi des précisions temporelles de front de montée et de front de descente des créneaux bien inférieures à la période temporelle de l'horloge externe. Avec l'exemple précédent, il est possible d'obtenir des résolutions temporelles de l'ordre de 250 picosecondes avec une incertitude moyenne encore appelé « jitter» de 50 picosecondes.

Pour des raisons de confort d'utilisation et d'ergonomie, les différentes fonctions du dispositif peuvent être contrôlés par un micro-ordinateur 3 au moyen d'interfaces électroniques 31 représentées symboliquement par la double flèche de la figure 1. Ces interfaces électroniques 31 peuvent être de simples liaisons électroniques ou être définies selon une norme électronique d'échange de données entre équipements électroniques comme, par exemple, la norme RS 232. Le logiciel de commande et de contrôle peut être développé à l'aide de logiciels spécifiques comme le logiciel de contrôle d'instruments de mesure connu sous la marque LABVIEW développé par la société National Instruments. Il est avantageux, lorsque le dispositif de synchronisation n'est plus sous le contrôle du micro-ordinateur 3, que l'ensemble des paramètres programmés, en particulier les différents délais régissant les signaux de synchronisation soient conservés de façon que le dispositif de synchronisation puisse fonctionner de façon autonome. A cette fin, le composant numérique programmable dispose d'une mémoire électronique 131.

Le dispositif de synchronisation comporte également une horloge interne 133 émettant un signal d'horloge interne oscillant à une seconde fréquence sensiblement identique à la première fréquence et des premiers moyens électroniques de gestion de sécurité intégrés au composant numérique programmable 130, de façon que ledit signal interne se substitue au signal d'horloge externe en cas de disparition de celui-ci. Cette horloge interne est issue d'un oscillateur accordable qui peut être, par exemple, un oscillateur à quartz.

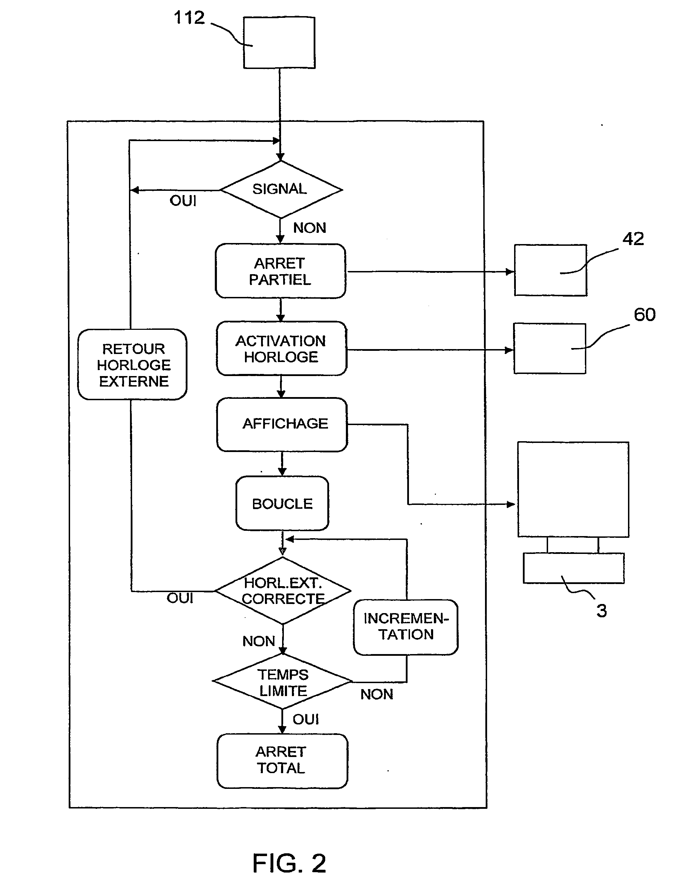

Le protocole de fonctionnement du dispositif de sécurité selon l'invention est décrit sur le diagramme de la figure 2.

Les différentes étapes du protocole sont les suivantes :
- Le dispositif de synchronisation délivre un signal d'horloge externe mis en forme et issu du dispositif électronique 112. Ce signal est examiné par des moyens électroniques. L'examen du signal est symbolisé par le losange intitulé « SIGNAL ». Si le signal est correct, bien entendu, le dispositif continue de fonctionner sur l'horloge externe, symbolisée par la sortie « OUI » du losange « SIGNAL », si le signal n'est pas conforme symbolisé par la sortie « NON » du losange « SIGNAL », on passe à l'étape suivante.
- Le dispositif de sécurité active alors trois fonctions symbolisées par les rectangles intitulés : « ARRET PARTIEL », « ACTIVATION HORLOGE » et « AFFICHAGE » qui correspondent aux tâches suivantes :
   o « ARRET PARTIEL » : les dispositifs présentant un danger ou susceptible d'être endommagés par un arrêt prolongé sont éteints ;
   o « ACTIVATION HORLOGE » : l'horloge interne est activée et se substitue à l'horloge externe de façon que les signaux de synchronisation indispensables à la bonne marche du système soient encore activés correctement ;
   o « AFFICHAGE » : des messages de panne sont affichés soit sur le dispositif de synchronisation lui-même par l'intermédiaires de diodes de signalisation, soit sur le micro-ordinateur de contrôle.
- L'étape suivante intitulée « BOUCLE » termine l'étape de sécurisation du système ;
- L'étape suivante intitulée «HORL.EXT. CORRECTE » vérifie que le signal externe est rétabli. Si c'est le cas, le dispositif se remet à fonctionner sur le signal d'horloge externe, symbolisé par la sortie « OUI » du losange « HORL.EXT. CORRECTE » vers le rectangle intitulé « RETOUR HORLOGE EXTERNE », si ce n'est pas le cas, on passe à l'étape suivante ;
- L'étape suivante intitulée « TEMPS LIMITE » vérifie que le temps de panne du signal d'horloge externe est inférieur à une valeur pré-déterminée. Dans le cas où le temps de panne est supérieur ou égal à cette valeur symbolisé par la sortie « OUI » du losange « TEMPS LIMITE », l'ensemble des composants du système est arrêté, symbolisé par le rectangle intitulé « ARRET TOTAL ». Dans le cas contraire, on teste de nouveau le signal d'horloge, externe au bout d'un temps d'incrémentation, symbole « INCREMENTATION » sur le diagramme jusqu'à ce que, soit le signal d'horloge soit rétabli, soit la durée maximale du temps de panne soit écoulée.

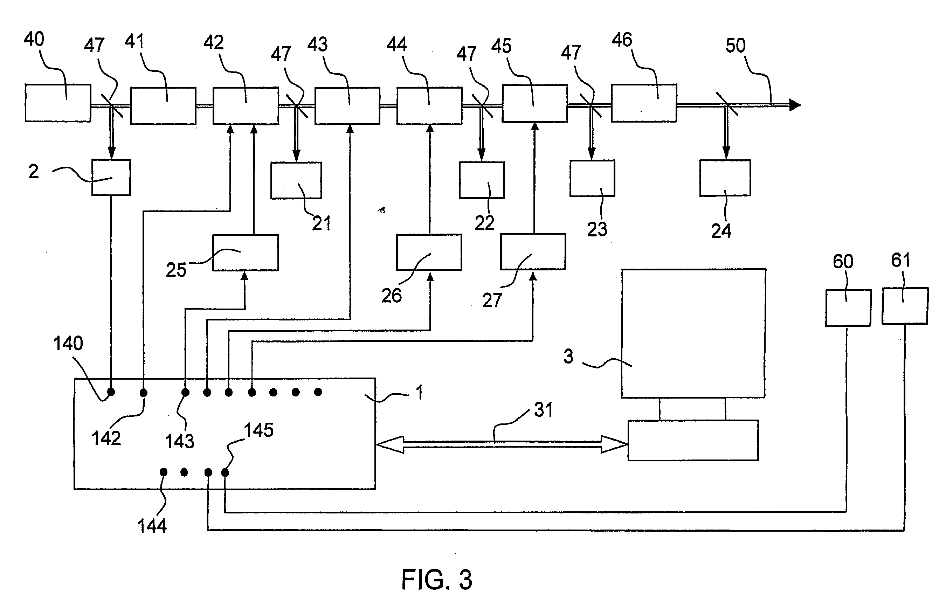

A titre d'exemple non limitatif, la figure 3 illustre un système comportant un dispositif de synchronisation 1 selon l'invention. Le dispositif nécessitant des signaux de synchronisation est une chaîne laser émettant des impulsions ultra-brèves. Le faisceau laser émis 50 est symbolisé sur la figure 3 par une flèche double. La chaîne comprend successivement :
- un oscillateur optique 40 délivrant des trains d'impulsions laser. Généralement, la durée des impulsions est de l'ordre de quelques centaines de femtosecondes et elles sont émises à haute fréquence de répétition, l'ordre de grandeur de cette première fréquence est de quelques dizaines de mégaHertz. Cette fréquence de répétition est d'une très grande stabilité ;
- un premier dispositif optique 41 à réseau de diffraction encore appelé en terminologie anglo-saxonne « Stretcher » permettant l'élargissement temporelle des impulsions femtosecondes. La durée des impulsions est ainsi multipliée d'un facteur compris entre 1000 et 10 000. En élargissant ainsi l'impulsion, on diminue d'autant sa puissance crête qui est considérable en sortie de chaîne. Elle pourra alors être amplifiée de façon importante en toute sécurité pour les différents éléments optiques de la chaîne ;
- un premier amplificateur 42 dit de régénération permettant de fournir à partir des impulsions issues du « stretcher » des impulsions dans ùn mode optique déterminé ayant une énergie plus importante. Ces impulsions sont délivrées à basse fréquence de répétition, comprise entre 1 Hertz et 500 kilohertz ;
- un dispositif à cellule de Pockels 43 permettant de limiter le bruit des impulsions en limitant strictement leur durée temporelle ;
- un ensemble de pré-amplification 44 et d'amplification 45 de l'impulsion laser ;
- enfin, un second dispositif 46 à réseau de diffraction encore appelé en terminologie anglo-saxonne « compressor » permettant la compression temporelle de l'impulsion de façon à lui rendre sa durée temporelle d'origine et à augmenter ainsi sa puissance crête.

Bien entendu, selon les besoins, cette chaîne peut contenir moins d'éléments optiques, le dispositif à cellule de Pockels n'est pas, par exemple, obligatoirement nécessaire. La chaîne peut également comporter d'autres éléments optiques, elle peut en outre posséder une voie d'amplification ou plusieurs voies disposées en parallèle.

Afin de disposer de données et de caractéristiques géométriques, photométriques et spectroscopiques sur les impulsions émises, des prélèvements sont effectués à différents endroits de la chaîne laser. Ces prélèvements sont effectués au moyen de lames semi-réfléchissantes 47 disposées le long du faisceau optique 50, les faisceaux lumineux ainsi prélevés sont envoyés, par exemple, sur des photodiodes de mesure 2, 22 et 24, des caméras ultra-rapides dites à balayage de fente 21 et 23, encore appelées en terminologie anglo-saxonne « streak camera », des oscilloscopes,... Ainsi, il est possible d'envoyer sur la photodiode 2 une partie du train d'impulsions laser issu de l'oscillateur optique 40. Le signal électrique issu de la dite photodiode est alors fourni sur l'entrée horloge 140 du dispositif de synchronisation 1 selon l'invention. A partir de ce signal, le dispositif de synchronisation 1 délivre :
- un premier signal périodique de synchronisation S₀ servant de référence de base de temps, ledit signal ayant une fréquence de répétition propre. Ledit signal est fourni sur une sortie électronique 142 dite sortie référence et commande le déclenchement du premier amplificateur 42 dit de régénération au moyen d'un dispositif de déclenchement 25 ;
- une pluralité de seconds signaux périodiques de synchronisation S_{SYNC}, lesdits seconds signaux étant décalés d'une durée programmable par rapport au premier signal de synchronisation et ayant également des fréquences de répétition programmables, lesdits seconds signaux étant fournis sur des sorties électroniques 143 dites sorties signaux à délais programmés et commandant les différents éléments optiques de la chaîne au moyen de dispositifs de déclenchement 26 et 27 .

Le dispositif de synchronisation 1 possède également des moyens de commande permettant de délivrer des signaux de commande pour des dispositifs électroniques ou pour des dispositifs électromécaniques 60 ou de recevoir des signaux de commande venant de systèmes de sécurité 61, lesdits signaux étant délivrés sur des sortie électroniques de commande 145.

L'ensemble des paramètres du dispositif de synchronisation est géré au moyen d'un micro-ordinateur 3 par l'intermédiaire d'une interface 31 représentée par une flèche double sur la figure 3.

En cas de panne de l'oscillateur, le signal de l'horloge externe disparaît. Dans ce cas, le dispositif de sécurité est activé. L'horloge interne se substitue à l'horloge externe pour continuer d'activer certains composants. On les maintient ainsi en température. D'autres composants comme certains amplificateurs sont déconnectés pour éviter un échauffement anormal de leur barreau d'amplification.

## Revendications

1. Chaîne laser comportant au moins les éléments optoélectroniques suivants :
• un oscillateur local (40) émettant un faisceau optique (50) sous forme de trains d'impulsions laser ;
• une chaîne d'amplification énergétique (42, 44, 45) ;
• des moyens de mises en forme spatiale et temporelle du faisceau optique (41, 43, 46) ;
• et des moyens de commande, de contrôle et de mesure (2, 3, 21, 22, 23, 24, 25, 26, 27, 31),
• un séparateur optique (47) semi-réfléchissant disposé en sortie de l'oscillateur local ;
• une photodiode (2) disposée sur une des voies dudit séparateur (47) de façon à recevoir une partie du faisceau optique, ladite photodiode délivrant un signal électrique représentatif dudit faisceau optique ;
• et un dispositif (1) électronique de génération de signaux de synchronisation à partir d'un signal d'horloge externe émis à une première fréquence, le signal électrique issu de la photodiode servant de signal d'horloge pour ledit dispositif, les signaux de synchronisation issus dudit dispositif (1) étant utilisés pour synchroniser les différents éléments optoélectroniques de la chaîne, ledit dispositif (1) comprenant également :
o une horloge interne (133) émettant un signal d'horloge interne oscillant à une seconde fréquence sensiblement identique à la première fréquence ;
o des premiers moyens électroniques de gestion de sécurité assurant les fonctions suivantes :
o « ARRET PARTIEL » : les éléments optoélectroniques présentant un danger ou susceptible d'être endommagés par un arrêt prolongé sont éteints ;
o « ACTIVATION HORLOGE » : l'horloge interne (133) est activée et se substitue à l'horloge externe de façon que les signaux de synchronisation indispensables à la bonne marche du système soient encore activés correctement ;
o « AFFICHAGE » : affichage de messages de panne ;
o « TEMPS LIMITE » : coupure de l'ensemble des éléments optoélectroniques commandés par le dispositif (1) à l'issue d'une durée pré-déterminée suivant la perte du signal d'horloge externe.

## Claims

1. Laser subsystem comprising at least the following optoelectronic elements:
• a local oscillator (40) emitting an optical beam (50) in the form of laser pulse trains;
• an energy amplification subsystem (42, 44, 45);
• means for spatially and temporally formatting the optical beam (41, 43, 46);
• and control, monitoring and measuring means (2, 3, 21, 22, 23, 24, 25, 26, 27, 31),
• a semi-reflecting optical splitter (47) positioned at the output of the local oscillator;
• a photodiode (2) positioned on one of the pathways of said splitter (47) so as to receive a portion of the optical beam, said photodiode delivering an electrical signal representative of said optical beam;
• and an electronic device (1) for generating synchronization signals from an external clock signal emitted at a first frequency, the electrical signal obtained from the photodiode serving as a clock signal for said device, the synchronization signals obtained from said device (1) being used to synchronize the various optoelectronic elements of the subsystem, said device (1) also comprising:
o an internal clock (133) emitting an internal clock signal oscillating at a second frequency substantially identical to the first frequency;
o first electronic security management means handling the following functions:
o "PARTIAL SHUTDOWN": the optoelectronic elements presenting a danger or likely to be damaged by a prolonged shutdown are switched off;
o "CLOCK ACTIVATION": the internal clock (133) is activated and replaces the external clock so that the synchronization signals essential to the correct operation of the system are again activated correctly;
o "DISPLAY": displays failure messages;
o "LIMIT TIME": cutting off all the optoelectronic elements controlled by the device (1) at the end of a predetermined duration following the loss of the external clock signal.

## Patentansprüche

1. Laserkette, die mindestens die folgenden optoelektronischen Elemente aufweist:
• einen lokalen Oszillator (40), der einen optischen Strahl (50) in Form von Laserimpulsfolgen sendet;
• eine energetische Verstärkungskette (42, 44, 45);
• Einrichtungen zur räumlichen und zeitlichen Formung des optischen Strahls (41, 43, 46);
• und Steuer-, Prüf- und Messeinrichtungen (2, 3, 21, 22, 23, 24, 25, 26, 27, 31),
• einen halbreflektierenden optischen Separator (47), der am Ausgang des lokalen Oszillators angeordnet ist;
• eine Fotodiode (2), die auf einem der Kanäle des Separators (47) angeordnet ist, um einen Teil des optischen Strahls zu empfangen, wobei die Fotodiode ein elektrisches Signal liefert, das für den optischen Strahl repräsentativ ist;
• und eine elektronische Vorrichtung (1) zur Erzeugung von Synchronisationssignalen ausgehend von einem externen Taktsignal, das mit einer ersten Frequenz gesendet wird, wobei das von der Fotodiode kommende elektrische Signal als Taktsignal für die Vorrichtung dient, wobei die von der Vorrichtung (1) kommenden Synchronisationssignale verwendet werden, um die verschiedenen optoelektronischen Elemente der Kette zu synchronisieren, wobei die Vorrichtung (1) ebenfalls enthält:
o einen internen Taktgeber (133), der ein internes Taktsignal sendet, das auf einer zweiten Frequenz schwingt, die im Wesentlichen gleich der ersten Frequenz ist;
o erste elektronische Sicherheitsverwaltungseinrichtungen, die die folgenden Funktionen gewährleisten:
o "TEILWEISES ABSCHALTEN": die optoelektronischen Elemente, die eine Gefahr darstellen oder durch ein längeres Abschalten beschädigt werden können, werden ausgeschaltet;
o "AKTIVIERUNG TAKTGEBER": der interne Taktgeber (133) wird aktiviert und ersetzt den externen Taktgeber, so dass die für den einwandfreien Betrieb des Systems notwendigen Synchronisationssignale noch korrekt aktiviert werden;
o "ANZEIGE": Anzeige von Störungsmeldungen;
o "ZEITBEGRENZUNG": Abschalten der Gesamtheit der von der Vorrichtung (1) gesteuerten optoelektronischen Elemente am Ende einer vorbestimmten Zeitdauer nach dem Verlust des externen Taktsignals.
